# EUROPÄISCHE PATENTANMELDUNG

(11) **EP 4 513 692 A1**
(43) Veröffentlichungstag der Anmeldung: **26.02.2025**
(21) Anmeldenummer: 24189938.4
(22) Anmeldetag: 22.07.2024
(51) Int. Cl.: H02G 1/12

(54) **SCHLITTENBREMSE**

(30) Priorität: 18.08.2023 DE 102023122180
(71) Anmelder: GLW GmbH, 88353 Kisslegg (DE)
(72) Erfinder: Hengler, Stefan, 88260 Argenbühl (DE)
(74) Vertreter: Otten, Roth, Dobler & Partner mbB Patentanwälte

(57) **Zusammenfassung**

Teilautomatisierte Abisoliervorrichtung für Kabel, umfassend eine Mechanikaufnahme, ein Klemmsystem,wobei das Klemmsystem ortsfest an der Machanikaufnahme angeordnet ist, einen Abziehschlitten, wobei an dem Abziehschlitten ein Schneidsystem angeordnet ist, wobei das Schneidsystem zumindest ein Schneidmittel umfasst und wobei das Schneidsystem bei einer Bewegung des Abziehschlittens in eine Abziehrichtung geschlossen ist und bei einer Bewegung des Abziehschlittens in eine Anfahrrichtung geöffnet ist, einen Verdrängerschlitten, wobei an dem Verdrängerschlitten eine Verdrängerkulisse angeordnet ist, wobei die Verdrängerkulisse zur Betätigung des Klemmsystems ausgebildet ist, ein Antriebssystem, wobei das Antriebssystem zum Bewegen des Abziehschlittens und/oder zum Bewegen des Verdrängerschlittens, vorzugsweise mittels Rotation einer Antriebsspindel, ausgebildet ist ein Verzögerungssystem, wobei das Verzögerungssystem eine Bewegung des Abziehschlittens zumindest zeitweise hemmt, wobei das Verzögerungssystem bei einer Bewegung des Abziehschlittens in die Anfahrrichtung aktiviert ist und bei einer Bewegung des Abziehschlittens in die Abziehrichtung gelöst ist.

## Beschreibung

Die vorliegende Erfindung betrifft das technische Gebiet der teilautomatisierten Abisoliervorrichtungen.

Im Stand der Technik sind teilautomatisierte Abisoliervorrichtungen bereits bekannt. Diese werden in der Regel mit einer Antriebseinheit, wie beispielsweise einem Elektromotor betrieben, der die Hin- und Rückbewegungen der einzelnen Elemente zum Abisolieren der Kabel mittels Umkehr seiner Bewegungsrichtung ermöglicht. Das abzuisolierende Kabel wird mit Klemmbacken fixiert, die Isolation mittels Schneidbacken abgetrennt und sodann die Klemmbacken von dem Kabel weggefahren, um die Isolation zu entfernen. Wird nun die Bewegungsrichtung des Elektromotors invertiert, würde die Mechanik derartiger Vorrichtungen eine spiegelsymmetrische Umkehr der vorausgegangenen Schritte erzeugen, was zu Beschädigungen des Kabels auf Grund noch geschlossener Klemmbacken führen würde.

Daher werden im Stand der Technik Verzögerungssysteme, wie beispielsweise Bremsen in der Art einer Dauerbremse mit Bremsbacken und Bremsklötzen eingesetzt, die dauerhaft gebremst dafür sorgen, dass die Klemmbacken zunächst geöffnet werden und sie erst sodann zurück zur Aufnahme eines weiteren Kabels bewegt werden.

Nachteilig ist hierbei jedoch, dass derartige Verzögerungssysteme im gesamten Verfahrensablauf aktiv sind und dadurch einem hohen Verschleiß unterliegen.

Technische Aufgabe der vorliegenden Erfindung ist es daher den Stand der Technik zu verbessern und eine Vorrichtung vorzuschlagen, die einen verschleißärmeren, wartungsärmeren und kostengünstigeren Einsatz ermöglicht.

Die technische Aufgabe wird durch einen Gegenstand mit den technischen Merkmalen nach den unabhängigen Ansprüchen gelöst.

Vorteilhafte Ausführungsformen sind Gegenstand der abhängigen Ansprüche, der Beschreibung und der Zeichnungen.

Gemäß einem Aspekt wird die technische Aufgabe der Erfindung gelöst durch eine teilautomatisierte Abisoliervorrichtung für Kabel, umfassend eine Mechanikaufnahme, ein Klemmsystem, wobei das Klemmsystem ortsfest an der Machanikaufnahme angeordnet ist, einen Abziehschlitten, wobei an dem Abziehschlitten ein Schneidsystem angeordnet ist, wobei das Schneidsystem zumindest ein Schneidmittel umfasst und wobei das Schneidsystem bei einer Bewegung des Abziehschlittens in eine Abziehrichtung geschlossen ist und bei einer Bewegung des Abziehschlittens in eine Anfahrrichtung geöffnet ist, einen Verdrängerschlitten, wobei an dem Verdrängerschlitten eine Verdrängerkulisse angeordnet ist, wobei die Verdrängerkulisse zur Betätigung des Klemmsystems ausgebildet ist, ein Antriebssystem, wobei das Antriebssystem zum Bewegen des Abziehschlittens und/oder zum Bewegen des Verdrängerschlittens, vorzugsweise mittels Rotation einer Antriebsspindel, ausgebildet ist ein Verzögerungssystem, wobei das Verzögerungssystem eine Bewegung des Abziehschlittens zumindest zeitweise hemmt, wobei das Verzögerungssystem bei einer Bewegung des Abziehschlittens in die Anfahrrichtung aktiviert ist und bei einer Bewegung des Abziehschlittens in die Abziehrichtung gelöst ist.

Im Sinne der Erfindung ist unter einem Kabel beispielsweise ein mit einer Isolierung ummantelter ein- oder mehradriger Verbund von, insbesondere elektrischen, Einzelleitungen zu verstehen, welche der Übertragung von Energie oder Information dient. Unter einer Isolierung können beispielsweise unterschiedliche Kunststoffe verstanden werden, welche die als Leiter genutzten Adern umgeben und gegeneinander isolieren. Die Begriffe Isolierung und Isolation sind hierbei als äquivalent auszulegen.

Es können beispielsweise elektrische Leiter, beispielsweise bestehend aus Kupfer, oder aus Aluminium oder geeigneten Metalllegierungen vorgesehen sein, aber auch Lichtwellenleiter, die beispielsweise aus Kunststoff- oder Quarzglasfasern bestehen, weshalb in diesem Zusammenhang auch Glasfaserkabeln gemeint sein können.

Ein Kabel kann beispielsweise im Gesamtaufbau noch weitere Mantellagen aus isolierendem Material oder metallische Folien oder Geflechte zum Zweck der elektromagnetischen Abschirmung oder als mechanischen Schutz enthalten.

Weiterhin ist im Sinne der Erfindung das Schneidsystem beispielsweise dahingehend ausgebildet, als dass es einen von dem übrigen Teil der Isolierung abzutrennenden Teil der Isolierung scheiden und den abzutrennenden Teil der Isolation von dem Kabel abtrennen oder abziehen kann.

Das Klemmsystem kann beispielsweise als eine Kabelklemmung ausgebildet sein.

Weiterhin kann der Abziehschlitten beispielsweise als ein Schieber für einen Isolationsabzug ausgebildet sein.

Darüber hinaus das Schneidmittel beispielsweise als Messer oder in der Art eines Abisoliermessers ausgebildet sein.

Der Verdrängerschlitten, kann außerdem beispielsweise als ein Schieber für eine Kabelklemmung ausgebildet sein.

Als Antriebssystem kann beispielsweise ein Motor, oder ein Elektromotor vorgesehen sein.

Weiterhin ist unter einem Verzögerungssystem, beispielsweise eine Hemmung oder ein mechanischer Widerstand zu verstehen der eine Bewegung des Abziehschlittens hemmt. Das Verzögerungssystem kann beispielsweise als eine Bremse ausgebildet sein, die zeitweise geöffnet sein kann, wodurch der mechanische Widerstand verringert werden kann. Weiterhin kann das Verzögerungssystem beispielsweise als ein Bremsbelag und/oder einer Kombination von Hebeln, Schiebern oder Backen zur Verzögerung, oder insbesondere Verzögerungshebeln ausgebildet sein, welche eine die Bewegungsdynamik verringernde Kraft ausüben.

Vorteilhaft ist hierbei, dass eine Möglichkeit geschaffen wird, mit nur einem einzigen Antriebssystem optimiert, insbesondere in Kosten und Dynamik, die Bewegungen, des Klemmens und Festhaltens, des Schneidens, als auch des Abziehens des abzuisolierenden Teilbereichs der Kabelisolierung, als auch das Klemmen des Kabels abzubilden. Etwaige Verzögerungssysteme, oder Bremsen, die für eine Entkopplung der Hin- und Herbewegung der Schlitten zueinander entkoppelt werden und der notwendige Bewegungsablauf realisiert werden kann. Dadurch, dass das Verzögerungssystem nicht dauerhaft aktiviert ist können vorteilhaft dessen Verschleiß minimiert werden, was sich vorteilhaft auf die Wartung und günstig im Hinblick aus entsprechende Ausfallzeiten der Vorrichtung auswirken kann.

In einer technisch vorteilhaften Ausführungsform ist vorgesehen, dass das Verzögerungssystem mittels des Verdrängerschlittens aktiviert und/oder gelöst ist.

Vorteilhaft können so bereits bestehende Komponenten der Vorrichtung eingesetzt und genutzt werden, was beispielsweise Herstellungskosten günstig beeinflussen kann, da auf zusätzliche Teile verzichtet werden kann.

In einer weiteren technisch vorteilhaften Ausführungsform ist vorgesehen, dass die Verdrängerkulisse zur zeitgleichen oder zeitversetzten Ansteuerung des Klemmsystems und/oder des Schneidsystems, ausgebildet ist, wobei die Verdrängerkulisse bevorzugt derart ausgebildet ist, dass ein Auslösen oder Öffnen des Klemmsystems vor dem Auslösen oder Öffnen des Schneidsystems ermöglicht ist.

Vorteilhaft kann so eine höhere Flexibilität bei der Konstruktion der Vorrichtung ermöglicht werden. Zusätzlich kann diese vereinfacht und weitere Teile und Komponenten eingespart werden.

Darüber hinaus ist in einer technisch vorteilhaften Ausführungsform vorgesehen, dass das Verzögerungssystem zumindest einen Verzögerungshebel, sowie zumindest einen Verzögerungsbelag aufweist, wobei der Verzögerungshebel, insbesondere mittels eines Hebelsystems, in Reibschluss mit dem Verzögerungsbelag gebracht werden kann, wobei ein Reibwiderstand des Reibschlusses insbesondere mittels eines ersten Federballasts Anlagedruckfeder im Zusammenwirken mit dem Verzögerungshebel gebildet ist, wobei besonders bevorzugt das Hebelsystem mittels des Abziehschlittens betätigt ist.

Der Verzögerungsbelag kann beispielsweise als Bremsbelag ausgebildet sein. Der erste Federballast kann beispielsweise als eine Feder für einen Anlagedruck des Bremsbelages oder als eine Anlagedruckfeder, auf ein Gegenlager vorgesehen sein.

Vorteilhaft kann eine einfache mechanische Ansteuerung der entsprechenden Komponenten ermöglicht werden. Diese kann konstruktiv einfach und flexibel umgesetzt werden und es bieten sich konstruktive Freiheiten, um die Vorrichtung individueller zu gestalten. Zusätzlich können bestehende Komponenten für verschiedene Bewegungsabläufe genutzt werden, was zusätzlich die Komplexität der Vorrichtung vereinfachen kann.

Darüber hinaus ist in einer technisch vorteilhaften Ausführungsform vorgesehen, dass die Antriebsspindel einen Längenausgleich im Bereich des Motors aufweist.

Vorteilhaft kann so beispielsweise die Länge des abzuisolierenden Teils der Kabelisolierung im Einsatz der Vorrichtung gewählt werden, was den Einsatz der Vorrichtung vergrößern kann.

Außerdem ist in einer technisch vorteilhaften Ausführungsform vorgesehen, dass an einer Oberfläche der Mechanikaufnahme ein Verzögerungsbelag ausgebildet ist, und/oder dass der Verzögungsbelag als separater Bremsbelag an der Mechanikaufnahme angeordnet, bevorzugt austauschbar ist.

Beispielsweise kann der Verzögerungsbelag auch als aktive Bremsfläche ausgebildet sein.

Vorteilhaft ist hierbei, dass mögliche Wartungsarbeiten im Betrieb der Vorrichtung minimiert und ein dadurch entstehender Betriebsausfall verringert werden kann. Darüber hinaus können Teile schneller und einfacher getauscht werden, was zusätzlich die Flexibilität beim Einsatz vergrößern kann. Insbesondere können Beläge je nach geforderter Bremswirkung, abhängig von den mechanischen und/oder umgebungsbedingten Einflussgrößen (z.B. Betriebstemperatur, Luftfeuchte, usw) angepasst gewählt werden.

In einer technisch vorteilhaften Ausführungsform ist außerdem vorgesehen, dass ein Lager der Antriebsspindel mit dem Verdrängerschlitten lösbar verbunden und/oder insbesondere in den Verdrängerschlitten eingeschraubt ist.

Dies kann zusätzlich vorteilhaft etwaige Wartungsarbeiten und/oder die Flexibilität beim Betrieb der Vorrichtung verbessern.

Darüber hinaus ist in einer technisch vorteilhaften Ausführungsform vorgesehen, dass der Abziehschlitten mittels des ersten Federballasts, insbesondere mittels einer ersten Feder gegen einen Anschlag gehalten ist.

Hierdurch können zusätzlich Bewegungsabläufe beim Abisolieren des Kabels zusammenhängend ausgeführt werden, was den Grad der Automatisierung vorteilhaft erhöhen kann.

Weiterhin ist in einer vorteilhaften Ausführungsform vorgesehen, dass der Verdrängerschlitten Führungswellen umfasst und mit diesen nicht lösbar verbunden ist, wobei insbesondere der Abziehschlitten gleitend an den Führungswellen gelagert ist.

Hierdurch wird vorteilhaft eine feste Verbindung zwischen den einzelnen Komponenten gebildet, was die Stabilität verbessert und eine prozesssichere Durchführung der Abisolierung optimieren kann.

Gemäß einem weiteren Aspekt wird die technische Aufgabe der Erfindung gelöst mittels eines Verfahrens, geeignet für eine zumindest teilautomatisierte Abisolierung von Kabeln, insbesondere mittels einer Vorrichtung nach einem der vorangehenden Ansprüche, umfassend die folgenden Verfahrensschritte:
a) Einlegen eines Kabels;
b) Betreiben des Antriebssystems in einer ersten Drehrichtung;
c) Bewegen des Verdrängerschlittens in eine Anfahrrichtung, insbesondere mittels der Antriebsspindel, bevorzugt mittels des sich in die erste Drehrichtung drehenden Antriebssystems;
d) Schließen des Klemmsystems zur Fixierung eines Teils der Isolierung,
   insbesondere mittels der Verdrängerkulisse;
e) Schließen des Schneidsystems zum Schneiden der Isolierung;
f) Bewegen des Abziehschlittens in eine Abziehrichtung zum Abziehen des Teils der Isolierung von dem Kabel, insbesondere mittels der Antriebsspindel, bevorzugt mittels des sich in die erste Drehrichtung drehenden Antriebssystems;
g) Reversierung der ersten Drehrichtung des Antriebssystems in eine zweite Drehrichtung;
h) Schließen des Verzögerungssystems zur Verzögerung der Bewegung des Abziehschlittens in die Anfahrrichtung; dadurch gekennzeichnet, dass
   das Verzögerungssystem im Zusammenhang mit der Bewegung der Abziehschlittens in Abziehrichtung geöffnet ist.

Vorteilhaft wird so eine Möglichkeit geschaffen, kostengünstig und schnell das Abisolieren eines Kabels zur Verfügung zu stellen.

In anderen Worten ausgedrückt ist in einer Ausführungsform das Folgende vorgesehen:
Mit Beginn des Verfahrens, beispielsweise ausgelöst mittels des Einlegens eines Kabels in die Vorrichtung, fährt die Antriebseinheit in eine erste Drehrichtung an und drückt, beispielsweise mittels Bewegung einer Antriebsspindel, einen Verdrängerschlitten, der beispielsweise als ein erster Schieber zur Kabelklemmung ausgebildet sein kann, sowie einen Abziehschlitten, der beispielsweise als ein zweiter Schieber zum Isolationsabzug ausgebildet sein kann, insbesondere in zueinander entgegengesetzte Richtung, auseinander.

Der Abziehschlitten, bzw. der Schieber für den Isolationsabzug, ist beispielsweise mittels eines ersten Federballasts gegen einen Anschlag gehalten, wodurch sich der Abziehschlitten, der beispielsweise als Klemm-Einschneidschieber ausgebildet sein kann, nach vorn bewegt, bis dieser beispielsweise an einem Klemmhebel ansteht und somit in seiner Bewegung blockiert ist.

Im Fall dass eine Anlagekraft am Abziehschlitten eine Federkraft für ein Klemmen der Kabel übersteigt, ist vorgesehen, dass sich der Abziehschlitten, bzw. der Schieber für den Isolationsabzug, insbesondere inklusive des Verzögerungssystems, sich in die Abziehrichtung, beispielsweise in Richtung der Antriebseinheit, bewegt, wobei die Federkraft für das Klemmen der Kabel überwunden wird.

Bei dieser Bewegung in Abziehrichtung ist die Reibung des Verzögerungssystems, beispielsweise zwischen Bremsbelag und einem Verzögerungshebel geringer, als bei der Bewegung in einer Anfahrrichtung. Dies insbesondere, da sich der Verzögerungshebel durch die entstehende Reibkraft am Bremsbelag selbst dreht und damit der Federkraft für den Anlagedruck des Bremsbelags entgegen wirkt. Vorgesehen ist insbesondere, dass diese Bewegung mit dem Erreichen einer Abzugslänge für die Isolierung endet.

In Folge einer Reversierung der Drehrichtung der Antriebseinheit, werden Abziehschlitten und Verdrängerschlitten, insbesondere der Schieber zur Kabelklemmung und der Schieber für den Isolationsabzug wieder zusammengezogen.

Nun wird der Abziehschlitten, bzw. der Schieber für den Isolationsabzug, mittels des ersten Federballasts und dessen Federkraft in eine Anfahrtsrichtung und in Richtung des Anschlags gedrückt. Hierdurch sorgt die Reibung der Verzögerungseinheit, insbesondere zwischen Bremsbelag und Verzögerungshebel zu einer Drehbewegung der Verzögerungshebel, was eine Selbsthemmung erzeugt und den Abziehschlitten in seiner Lage fixiert festhält. Jetzt kann der Klemmhebel ohne Verzögerung, insbesondere ohne Widerstand des Verzögerungssystems, in eine Anfahrtsrichtung zurückgezogen werden. Dabei wird das Schneidsystem, beispielsweise umfassend wenigstens ein Abisoliermesser, in eine geöffnete Grundstellung gebracht und die Klemmung des Kabels gelöst.

Kurz vor dem Anschlag des Verdrängerschlittens, drücken die Führungswellen mit Planflächen auf einen Lösehebel. Dieser kippt dabei und drückt auf einen Kniehebelschieber, der dann die Selbsthemmung über die Verzögerungshebel löst und den Abziehschieber in einer Anfahrtsrichtung freigibt.

Auf der Bewegung in Anfahrtsrichtung des Abisolierschlittens entsteht mittels eines Wechsels von Hemmen und Lösen eine Oszillationsbewegung der Führungswellen und damit auch des Verdrängerschlitten.

Darüber hinaus ist in einer technisch vorteilhaften Ausführungsform vorgesehen, dass im Verfahrensschritt c) ein Aktivieren und/oder Lösen des Verzögerungssystems mittels des Verdrängerschlittens ausgeführt wird.

Hierdurch können Verfahrensschritte vereinfacht und eine schnellere Durchführung des Verfahrens ermöglicht werden. Ein möglicher Verschleiß der Komponenten kann somit zusätzlich verringert werden.

Weiterhin ist in einer technisch vorteilhaften Ausführungsform des Verfahrens vorgesehen, dass der Verfahrensschritt f) erfolgt, sobald der Verdrängerschlitten an einen Anschlag bewegt wurde.

Beispielsweise kann ein Anschlag als ein festes Element oder eine feste Baugruppe ausgebildet sein.

Auch dies kann sich vorteilhaft auf eine schnellere Durchführung des Verfahrens auswirken, insbesondere unter Zuhilfenahme bestehender Komponenten, die aufgrund ihrer physikalischen Eigenschaften ein zügiges Auslösen eines weiteren Verfahrensschritts ermöglichen. Darüber hinaus kann hierdurch der Automatisierungsgrad erhöht werden.

Weiterhin ist in einer technisch vorteilhaften Ausführungsform vorgesehen, dass der Verfahrensschritt g) erfolgt, sobald der Abziehschlitten an einen Anschlag bewegt wurde.

Auch dies kann sich vorteilhaft auf eine schnellere Durchführung des Verfahrens auswirken, insbesondere unter Zuhilfenahme bestehender Komponenten, die aufgrund ihrer physikalischen Eigenschaften ein zügiges Auslösen eines weiteren Verfahrensschritts ermöglichen. Darüber hinaus kann hierdurch ebenfalls der Automatisierungsgrad weiter erhöht werden.

In einer technisch vorteilhaften Ausführungsform ist vorgesehen, dass wenigstens einer der Verfahrensschritte, insbesondere einer der Verfahrensschritte c) bis h) gegen einen zweiten Federballast erfolgt.

Auch hierdurch kann das Verfahren zügiger durchgeführt und gegebenenfalls mit einem höheren Grad an Automatisierung erfolgen.

Weiterhin ist in einer technisch vorteilhaften Ausführungsform vorgesehen sein, dass das Betätigen des Klemmsystems und das Betätigen des Schneidsystems zeitgleich oder zeitversetzt ausgeführt werden, wobei im zeitversetzten Fall insbesondere das Betätigen des Schneidsystems nach dem Betätigen des Klemmsystems ausgeführt wird.

Hierdurch kann eine Flexibilisierung des Verfahrens ermöglicht werden, die beispielsweise mit den bereits genannten Vorteilen zur schnelleren Durchführung des Verfahrens zusätzlich verknüpft werden kann.

Außerdem ist in einer technisch vorteilhaften Ausführungsform vorgesehen, dass sämtliche Verfahrensschritte mittels des Verfahrensschritts a), insbesondere automatisiert, ausgelöst werden.

Hierdurch kann ein möglichst schnelles Durchführen des Verfahrens ermöglicht werden. Arbeitsschritte wie beispielsweise ein zusätzliches Auslösen von Verfahrensschritten können so vermieden und ein effizientes Abisolieren von Kabeln erreicht werden.

Ausführungsbeispiele der Erfindung sind in den Figuren dargestellt und werden im Folgenden näher beschrieben:
- Fig 1a:: eine schematische Darstellung der Vorrichtung in einer Grundstellung in Draufsicht;
- Fig 1b:: eine schematische Darstellung der Vorrichtung in einer Grundstellung in Seitenansicht;
- Fig 1c:: eine schematische Darstellung der Vorrichtung in einer Grundstellung in Untersicht;
- Fig 2a:: eine schematische Darstellung der Vorrichtung in einer ersten Momentaufnahme des Verfahrens in Draufsicht;
- Fig 2b:: eine schematische Darstellung der Vorrichtung in einer ersten Momentaufnahme des Verfahrens in Seitenansicht;
- Fig 2c:: eine schematische Darstellung der Vorrichtung in einer ersten Momentaufnahme des Verfahrens in Untersicht;
- Fig 3a: eine schematische Darstellung der Vorrichtung in einer zweiten Momentaufnahme des Verfahrens in Draufsicht;
- Fig 3b: eine schematische Darstellung der Vorrichtung in einer zweiten Momentaufnahme des Verfahrens in Seitenansicht;
- Fig 3c: eine schematische Darstellung der Vorrichtung in einer zweiten Momentaufnahme des Verfahrens in Untersicht;
- Fig 4a: eine schematische Darstellung der Vorrichtung in einer dritten Momentaufnahme des Verfahrens in Draufsicht;
- Fig 4b: eine schematische Darstellung der Vorrichtung in einer dritten Momentaufnahme des Verfahrens in Seitenansicht;
- Fig 4c: eine schematische Darstellung der Vorrichtung in einer dritten Momentaufnahme des Verfahrens in Untersicht.

Die Figuren zeigen schematische Ausführungsformen der Erfindung aus verschiedenen Ansichten der Vorrichtung, zu verschiedenen Momenten im Ablauf des Verfahrens.

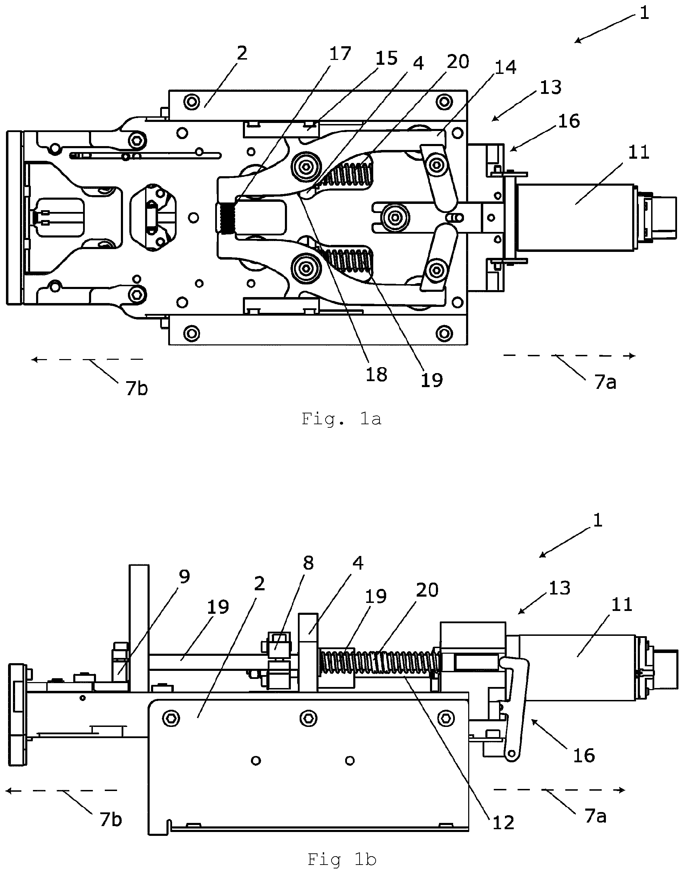

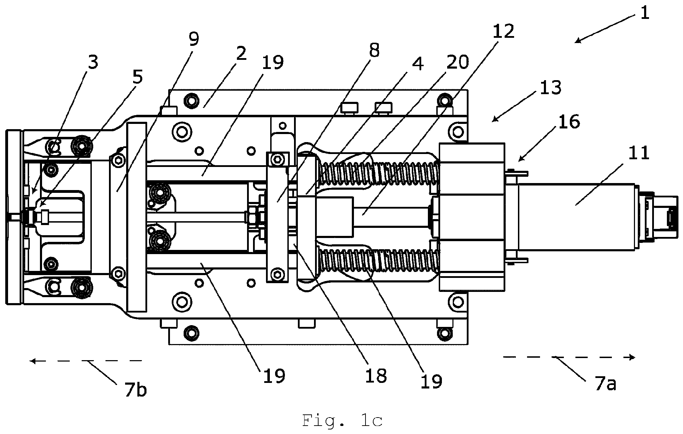

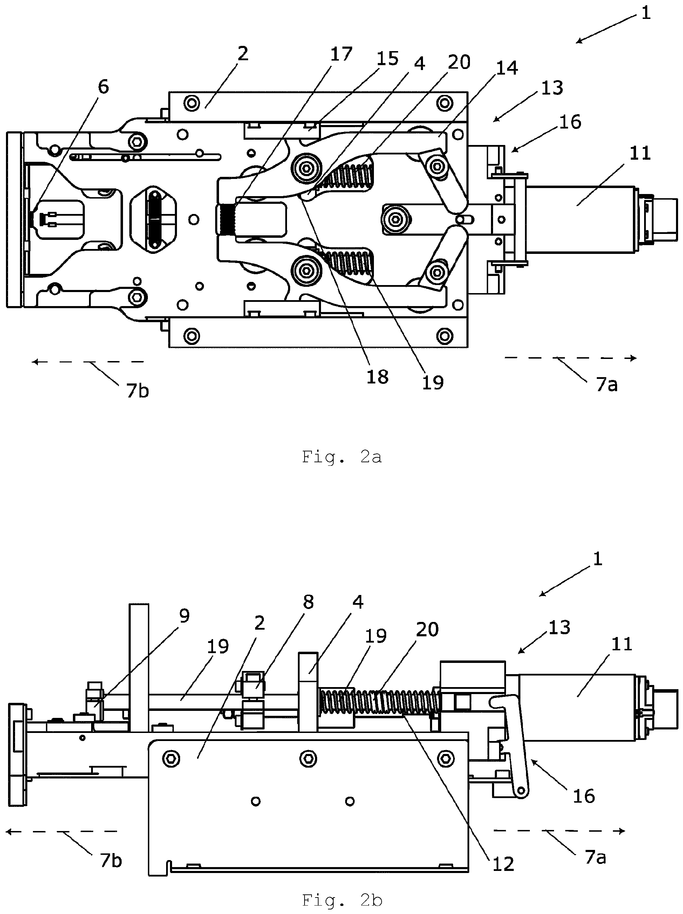

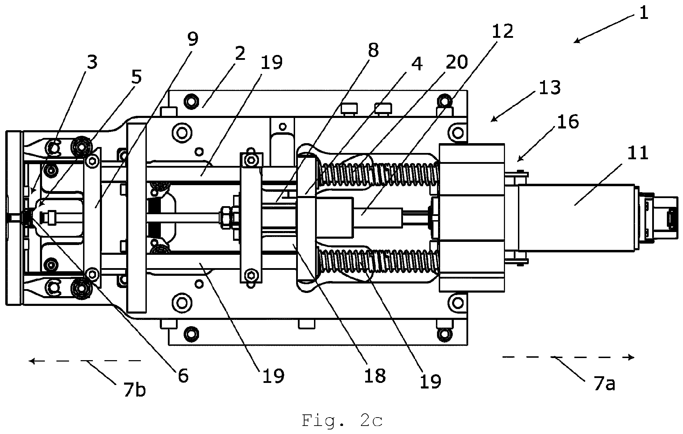

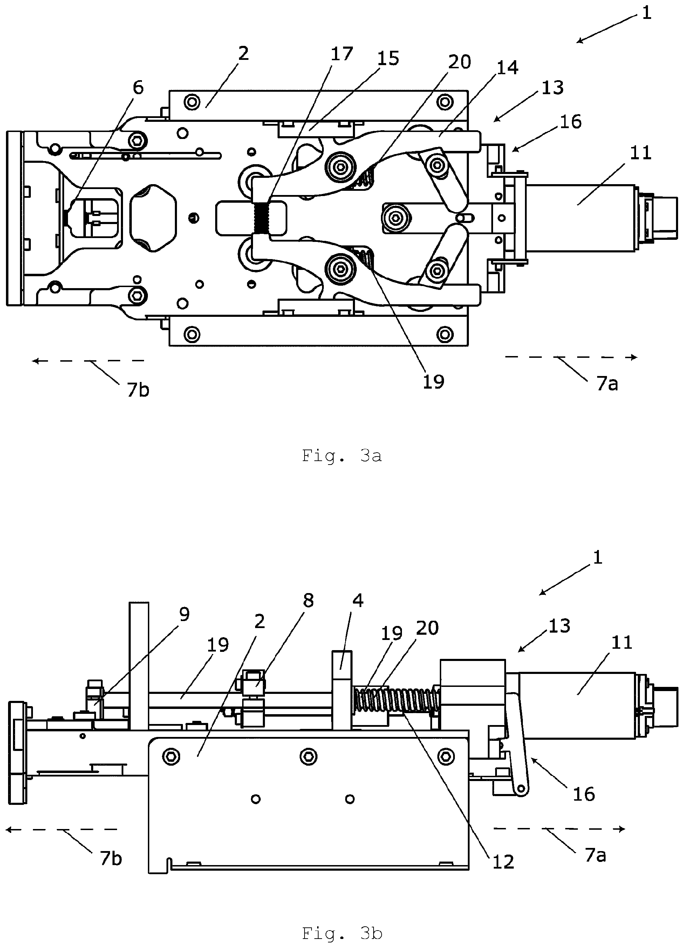

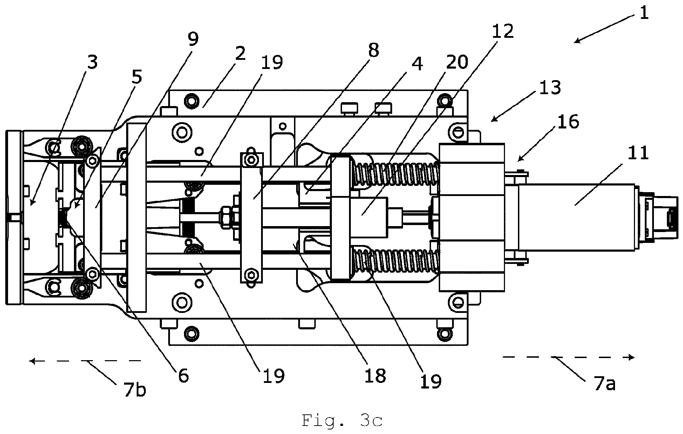

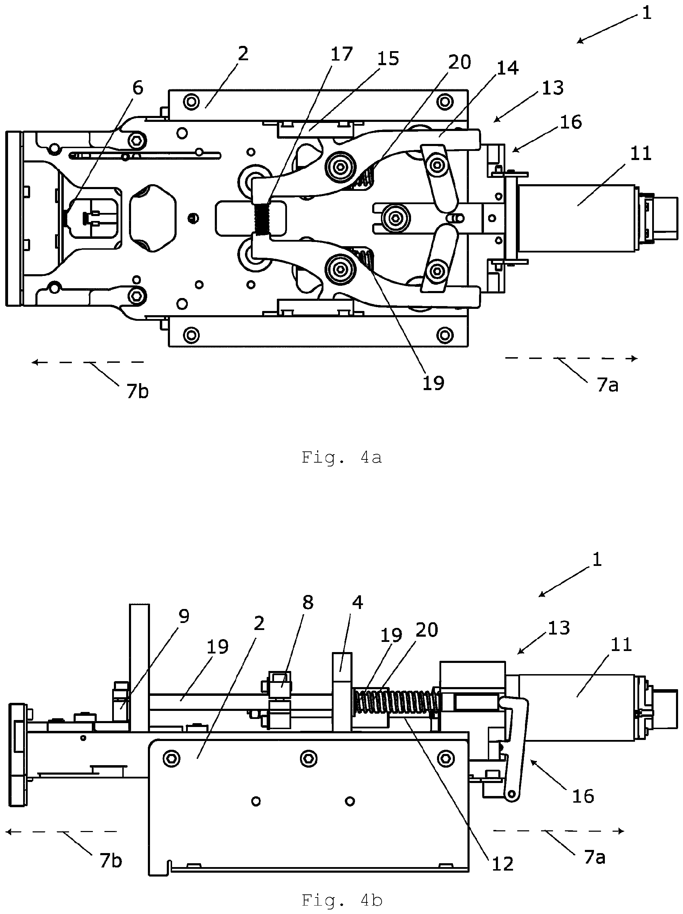

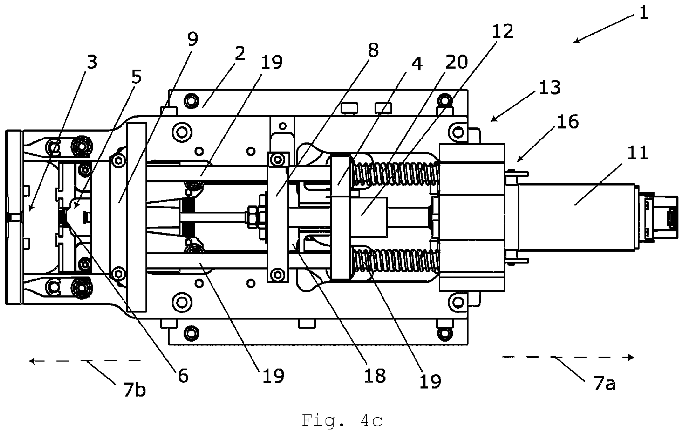

Die Figuren 1a, 1b und 1c zeigen jeweils eine Grundstellung der Vorrichtung in einem ersten Moment im Ablauf des Verfahrens. Die Figuren 2a, 2b und 2c zeigen jeweils die Vorrichtung in einem zweiten Moment im Ablauf des Verfahrens. Die Figuren 3a, 3b und 3c zeigen jeweils die Vorrichtung in einem dritten Moment im Ablauf des Verfahrens. Die Figuren 4a, 4b und 4c zeigen jeweils die Vorrichtung in einem vierten Moment im Ablauf des Verfahrens.

Die Figuren 1a, 2a, 3a und 4a zeigen jeweils die Vorrichtung in einer ersten Ansicht in jeweils verschiedenen Momenten des Verfahrens. Die Figuren 1b, 2b, 3b und 4b zeigen jeweils die Vorrichtung in einer zweiten Ansicht in jeweils verschiedenen Momenten des Verfahrens. Die Figuren 1c, 2c, 3c und 4c zeigen jeweils die Vorrichtung in einer dritten Ansicht in jeweils verschiedenen Momenten des Verfahrens.

In einer Zusammenschau der Figuren ist das Zusammenwirken der einzelnen Komponenten der Vorrichtung dargestellt. Zu sehen ist eine teilautomatisierte Abisoliervorrichtung 1 für Kabel (nicht dargestellt) umfassend eine Mechanikaufnahme 2. Ein Klemmsystem 3 ist ortsfest an der Machanikaufnahme 2 angeordnet. An einem Abziehschlitten 4 ist ein Schneidsystem 5 angeordnet, wobei das Schneidsystem 5 zumindest ein Schneidmittel 6 umfasst. Das Schneidsystem 5 ist bei einer Bewegung des Abziehschlittens 4 in eine Abziehrichtung 7a geschlossen und bei einer Bewegung des Abziehschlittens in eine Anfahrrichtung 7b geöffnet.

Weiterhin ist ein Verdrängerschlitten 8 dargestellt, wobei an dem Verdrängerschlitten 8 eine Verdrängerkulisse 9 angeordnet ist, wobei die Verdrängerkulisse 9 zur Betätigung des Klemmsystems 3 ausgebildet ist. Auch ist ein Antriebssystem 11 dargestellt, wobei das Antriebssystem 11 zum Bewegen des Abziehschlittens 4 und/oder zum Bewegen des Verdrängerschlittens 8, mittels Rotation einer Antriebsspindel 12, ausgebildet ist. Außerdem ist ein Verzögerungssystem 13 dargestellt, wobei das Verzögerungssystem 13 eine Bewegung des Abziehschlittens 4 zumindest zeitweise hemmt. Das Verzögerungssystem 13 ist bei einer Bewegung des Abziehschlittens 4 in die Anfahrrichtung 7b aktiviert und bei einer Bewegung des Abziehschlittens 4 in die Abziehrichtung 7a gelöst.

Vorteilhaft kann hierdurch ein hoher Grad an Automatisierung bei möglichst geringem Einsatz von einzelnen Komponenten zur Ansteuerung erreicht werden. Mit nur einem einzigen Antriebssystem können die notwendigen Bewegungen angesteuert werden und die Abisolierung von Kabeln schnell und einfach erfolgen, wobei ein Verschleiß etwaiger Kompontenten verringert wird. Hierdurch können Ausfallzeiten verringert und eine hohe Einsatzeffizienz ermöglicht werden.

Insbesondere in einer Zusammenschau der Figuren 1c und 2c ist dargestellt dass das Verzögerungssystem mittels des Verdrängerschlittens, je nach betrachtetem Moment, aktiviert oder gelöst ist. Die Verdrängerkulisse 9 ist zur zeitgleichen oder zeitversetzten Ansteuerung des Klemmsystems 3 und/oder des Schneidsystems 5, ausgebildet, wobei die Verdrängerkulisse 9 bevorzugt derart ausgebildet ist, dass ein Auslösen oder Öffnen des Klemmsystems 3 vor dem Auslösen oder Öffnen des Schneidsystems 5 ermöglicht ist.

In einer Zusammenschau insbesondere der Figuren 1a, 2a, 3a und 4a mit den übrigen Figuren ist dargestellt, dass das Verzögerungssystem 13 zumindest einen Verzögerungshebel 14, sowie zumindest einen Verzögerungsbelag 15 aufweist, wobei der Verzögerungshebel 14, insbesondere mittels eines Hebelsystems 16, in Reibschluss mit dem Verzögerungsbelag 15 gebracht werden kann. Ein Reibwiderstand des Reibschlusses ist mittels eines ersten Federballasts 17 im Zusammenwirken mit dem Verzögerungshebel 14 gebildet. Das Hebelsystem 16 ist mittels des Abziehschlittens 4 betätigt. Nicht dargestellt ist, dass die Antriebsspindel 12 einen Längenausgleich im Bereich des Antriebssystems 11 aufweist. An einer Oberfläche der Mechanikaufnahme 2 ist ein Verzögerungsbelag 15 ausgebildet, wobei der Verzögungsbelag 15 als separater Bremsbelag an der Mechanikaufnahme 2 angeordnet ist.

Weiterhin ist in einer Zusammenschau der Figuren dargestellt, dass der Abziehschlitten 4 mittels eines ersten Federballasts 17 gegen einen Anschlag 18 gehalten ist. Der Verdrängerschlitten 8 umfasst Führungswellen 19 und ist mit diesen nicht lösbar verbunden ist, wobei der Abziehschlitten 4 gleitend an den Führungswellen 19 gelagert ist.

Darüber hinaus ist in einer Zusammenschau aller Figuren ein Verfahren dargestellt, dass geeignet ist für eine zumindest teilautomatisierte Abisolierung von Kabeln (nicht dargestellt), umfassend die folgenden Verfahrensschritte:
a) Einlegen eines Kabels (nicht dargestellt);
b) Betreiben des Antriebssystems 11 in einer ersten Drehrichtung;
c) Bewegen des Verdrängerschlittens 8 in eine Anfahrrichtung 7b, mittels der Antriebsspindel 12, mittels des sich in die erste Drehrichtung drehenden Antriebssystems 11;
d) Schließen des Klemmsystems 3 zur Fixierung eines Teils der Isolierung, mittels der Verdrängerkulisse 9;
e) Schließen des Schneidsystems 5 zum Schneiden der Isolierung;
f) Bewegen des Abziehschlittens 4 in eine Abziehrichtung 7a zum Abziehen des Teils der Isolierung von dem Kabel, mittels der Antriebsspindel 12, mittels des sich in die erste Drehrichtung drehenden Antriebssystems 11;
g) Reversierung der ersten Drehrichtung des Antriebssystems 11 in eine zweite Drehrichtung;
h) Schließen des Verzögerungssystems 13 zur Verzögerung der Bewegung des Abziehschlittens 4 in die Anfahrrichtung 7b; wobei das Verzögerungssystem 13 im Zusammenhang mit der Bewegung der Abziehschlittens 4 in Abziehrichtung 7a geöffnet ist.

Weiterhin ist in einer Zusammenschau aller Figuren dargestellt, dass im Verfahrensschritt c) ein Aktivieren und/oder Lösen des Verzögerungssystems 13 mittels des Verdrängerschlittens 8 ausgeführt wird und dass der Verfahrensschritt f) und der Verfahrensschritt g) erfolgt, sobald der Verdrängerschlitten 8 an einen Anschlag 18 bewegt wurde. Darüber hinaus ist dargestellt, dass wenigstens einer der Verfahrensschritte gegen einen zweiten Federballast 20 erfolgt.

In dem in den Figuren 1a, 1b und 1c dargestellten ersten Moment des Verfahrens ist Grundstellung der Abisoliervorrichtung 1 dargestellt, bei der exmplarisch beide Schieber, also Abziehschlitten 4 und Verdrängerschlitten 8 sich in dieser Grundstellung befinden. In dem in den Figuren 2a, 2b und 2c dargestellten Moment ist der Schieber der Kabelklemmung, also der Verdrängerschlitten 8 vollständig ausgefahren bis zu einem nicht näher bezeichneten Anschlag des im Bereich des Hebelsystems 16 angeordneten Anschlags. In dem in den Figuren 3a, 3b und 3c dargestellten Moment ist der Schieber der Kabelklemmung, also der Verdrängerschlitten 8 ausgefahren und der Schieber für den Isolationsabzug, also der Abziehschlitten 4 vollständig auf eine Länge ausgefahren, die für das Abziehen der Isolation von dem Kabel vorgesehen ist. In dem in den Figuren 4a, 4b und 4c dargestellten Moment ist der Schieber der Kabelklemmung, also der Verdrängerschlitten 8 wieder bis zu seinem Anschlag 8 eingefahren. Der Schieber des Isolationsabzugs, also der Abziehschlitten 4 ist mittels eines Hebelsystems 16 und mittels des Schiebers für die Kabelklemmung, also dem Verdrängerschlittens 8 für einen Rückhub freigegeben.

### Bezugszeichenliste:

- 1: Abisoliervorrichtung
- 2: Mechanikaufnahme
- 3: Klemmsystem
- 4: Abziehschlitten
- 5: Schneidsystem
- 6: Schneidmittel
- 7a: Abziehrichtung
- 7b: Anfahrrichtung
- 8: Verdrängerschlitten
- 9: Verdrängerkulisse

- 11: Antriebssystem
- 12: Antriebsspindel
- 13: Verzögerungssystem
- 14: Verzögerungshebel
- 15: Verzögerungsbelag
- 16: Hebelsystems
- 17: erster Federballast
- 18: Anschlag
- 19: Führungswellen
- 20: zweiter Federballast

## Patentansprüche

1. Teilautomatisierte Abisoliervorrichtung (1) für Kabel, umfassend
eine Mechanikaufnahme (2),
ein Klemmsystem (3),
wobei das Klemmsystem (3) ortsfest an der Machanikaufnahme (2) angeordnet ist,
einen Abziehschlitten (4),
wobei an dem Abziehschlitten (4) ein Schneidsystem (5) angeordnet ist,
wobei das Schneidsystem (5) zumindest ein Schneidmittel (6) umfasst und
wobei das Schneidsystem (5) bei einer Bewegung des Abziehschlittens (4) in eine Abziehrichtung (7a) geschlossen ist und bei einer Bewegung des Abziehschlittens in eine Anfahrrichtung (7b) geöffnet ist,
einen Verdrängerschlitten (8),
wobei an dem Verdrängerschlitten (8) eine Verdrängerkulisse (9) angeordnet ist,
wobei die Verdrängerkulisse (9) zur Betätigung des Klemmsystems (3) ausgebildet ist,
ein Antriebssystem (11),
wobei das Antriebssystem (11) zum Bewegen des Abziehschlittens (4) und/oder zum Bewegen des Verdrängerschlittens (8), vorzugsweise mittels Rotation einer Antriebsspindel (12), ausgebildet ist
ein Verzögerungssystem (13),
wobei das Verzögerungssystem (13) eine Bewegung des Abziehschlittens (4) zumindest zeitweise hemmt,
**dadurch gekennzeichnet, dass**
das Verzögerungssystem (13) bei einer Bewegung des Abziehschlittens (4) in die Anfahrrichtung (7b) aktiviert ist und bei einer Bewegung des Abziehschlittens (4) in die Abziehrichtung (7a) gelöst ist.

2. Vorrichtung nach einem der vorangehenden Ansprüche, **dadurch gekennzeichnet, dass** das Verzögerungssystem (13) mittels des Verdrängerschlittens (8) aktiviert und/oder gelöst ist.

3. Vorrichtung nach einem der vorangehenden Ansprüche **dadurch gekennzeichnet, dass** die Verdrängerkulisse (9) zur zeitgleichen oder zeitversetzten Ansteuerung des Klemmsystems (3) und/oder des Schneidsystems (5), ausgebildet ist,
wobei die Verdrängerkulisse (9) bevorzugt derart ausgebildet ist, dass ein Auslösen oder Öffnen des Klemmsystems (3) vor dem Auslösen oder Öffnen des Schneidsystems (5) ermöglicht ist.

4. Vorrichtung nach einem der vorangehenden Ansprüche, **dadurch gekennzeichnet, dass** das Verzögerungssystem (13) zumindest einen Verzögerungshebel (14), sowie zumindest einen Verzögerungsbelag (15) aufweist,
wobei der Verzögerungshebel (14), insbesondere mittels eines Hebelsystems (16), in Reibschluss mit dem Verzögerungsbelag (15) gebracht werden kann,
wobei ein Reibwiderstand des Reibschlusses insbesondere mittels eines ersten Federballasts (17) im Zusammenwirken mit dem Verzögerungshebel (14) gebildet ist,
wobei besonders bevorzugt das Hebelsystem (16) mittels des Abziehschlittens (4) betätigt ist.

5. Vorrichtung nach einem der vorangehenden Ansprüche, **dadurch gekennzeichnet, dass** die Antriebsspindel (12) einen Längenausgleich im Bereich des Antriebssystems (11) aufweist.

6. Vorrichtung nach einem der vorangehenden Ansprüche, **dadurch gekennzeichnet, dass** an einer Oberfläche der Mechanikaufnahme (2) ein Verzögerungsbelag (15) ausgebildet ist, oder dass der Verzögungsbelag (15) als separater Bremsbelag an der Mechanikaufnahme (2) angeordnet ist.

7. Vorrichtung nach einem der vorangehenden Ansprüche, **dadurch gekennzeichnet, dass** ein Lager der Antriebsspindel (12) mit dem Verdrängerschlitten (8) lösbar verbunden und/oder insbesondere in den Verdrängerschlitten (8) eingeschraubt ist.

8. Vorrichtung nach einem der vorangehenden Ansprüche, **dadurch gekennzeichnet, dass** der Abziehschlitten (4) mittels des ersten Federballasts (17), insbesondere mittels einer ersten Feder gegen einen Anschlag (18) gehalten ist.

9. Vorrichtung nach einem der vorangehenden Ansprüche, **dadurch gekennzeichnet, dass** der Verdrängerschlitten (8) Führungswellen (19) umfasst und mit diesen nicht lösbar verbunden ist, wobei insbesondere der Abziehschlitten (4) gleitend an den Führungswellen (19) gelagert ist.

10. Verfahren, geeignet für eine zumindest teilautomatisierte Abisolierung von Kabeln,
insbesondere mittels einer Vorrichtung (1) nach einem der vorangehenden Ansprüche,
umfassend die folgenden Verfahrensschritte:
a) Einlegen eines Kabels;
b) Betreiben des Antriebssystems (11) in einer ersten Drehrichtung;
c) Bewegen des Verdrängerschlittens (8) in eine Anfahrrichtung (7b),
insbesondere mittels der Antriebsspindel (12), bevorzugt mittels des sich in die erste Drehrichtung drehenden Antriebssystems (11);
d) Schließen des Klemmsystems (3) zur Fixierung eines Teils der Isolierung,
insbesondere mittels der Verdrängerkulisse (9);
e) Schließen des Schneidsystems (5) zum Schneiden der Isolierung;
f) Bewegen des Abziehschlittens (4) in eine Abziehrichtung (7a) zum Abziehen des Teils der Isolierung von dem Kabel,
insbesondere mittels der Antriebsspindel (12), bevorzugt mittels des sich in die erste Drehrichtung drehenden Antriebssystems (11);
g) Reversierung der ersten Drehrichtung des Antriebssystems (11) in eine zweite Drehrichtung;
h) Schließen des Verzögerungssystems (13) zur Verzögerung der Bewegung des Abziehschlittens (4) in die Anfahrrichtung (7b);
**dadurch gekennzeichnet, dass**
das Verzögerungssystem (13) im Zusammenhang mit der Bewegung der Abziehschlittens (4) in Abziehrichtung (7a) geöffnet ist.

11. Verfahren nach einem der vorangehenden Ansprüche, **dadurch gekennzeichnet, dass** im Verfahrensschritt c) ein Aktivieren und/oder Lösen des Verzögerungssystems (13) mittels des Verdrängerschlittens (8) ausgeführt wird.

12. Verfahren nach einem der vorangehenden Ansprüche, **dadurch gekennzeichnet, dass** der Verfahrensschritt f) erfolgt, sobald der Verdrängerschlitten (8) an einen Anschlag 18) bewegt wurde.

13. Verfahren nach einem der vorangehenden Ansprüche, **dadurch gekennzeichnet, dass** der Verfahrensschritt g) erfolgt, sobald der Abziehschlitten (4) an einen Anschlag (18) bewegt wurde

14. Verfahren nach einem der vorangehenden Ansprüche, **dadurch gekennzeichnet, dass** wenigstens einer der Verfahrensschritte, insbesondere einer der Verfahrensschritte c) bis h) gegen einen zweiten Federballast (20) erfolgt.

15. Verfahren nach einem der vorangehenden Ansprüche, **dadurch gekennzeichnet, dass** das Betätigen des Klemmsystems (3) und das Betätigen des Schneidsystems (5) zeitgleich oder zeitversetzt ausgeführt werden,
wobei im zeitversetzten Fall insbesondere das Betätigen des Schneidsystems (5) nach dem Betätigen des Klemmsystems (3) ausgeführt wird.

16. Verfahren nach einem der vorangehenden Ansprüche, **dadurch gekennzeichnet, dass** sämtliche Verfahrensschritte mittels des Verfahrensschritts a), insbesondere automatisiert, ausgelöst werden.
